(19) Europäisches Patentamt

European Patent Office

Office européen des brevets

(11) **EP 0 963 057 A2**

(12) **EUROPÄISCHE PATENTANMELDUNG**

(43) Veröffentlichungstag:
08.12.1999 Patentblatt 1999/49

(51) Int Cl.⁶: **H04B 3/46**

(21) Anmeldenummer: **99440119.8**

(22) Anmeldetag: **21.05.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **05.06.1998 DE 19825196**

(71) Anmelder: **ALCATEL**
**75008 Paris (FR)**

(72) Erfinder: **Maurer, Michael**
**71336 Waiblingen (DE)**

(74) Vertreter: **Müller, Joachim, Dipl.-Ing. et al**
**Alcatel**
**Intellectual Property Department, Stuttgart**
**Postfach 30 09 29**
**70449 Stuttgart (DE)**

(54) **Verfahren zur Kopplungsbestimmung zwischen zwei Telekommunikations (=TK)- Wegen**

(57) Ein Verfahren zur Bestimmung der Signal-Kopplung zwischen zwei Telekommunikations(=TK)-Wegen durch sukzessive Bildung von Quotienten Q aus der Umhüllenden eines Sendesignals T und der Umhüllenden eines von diesem verursachten Echosignals R in Empfangsrichtung eines das Sendesignal T aussendenden TK-Anschlusses zu verschiedenen, aufeinanderfolgenden Zeitpunkten innerhalb eines Zeitfensters Z2, wobei als Maß für die Stärke der Kopplung der beiden TK-Wege das Minimum der Quotienten Q im Zeitfenster Z2 bestimmt wird, ist dadurch gekennzeichnet, daß in n aufeinander folgenden kurzen Zeitfenstern der Länge $Z1_k$ « Z2 die Maxima der Umhüllenden des jeweiligen Sendesignals $T_k$ und des zugehörigen Echosignals $R_k$ bestimmt und daraus jeweils ein Quotient $Q_k = R_k^{max}/T_k^{max}$ gebildet wird, und daß innerhalb des langen Zeitfensters Z2 das Minimum $Min(Q_k)$ aller in den aufeinander folgenden kurzen Zeitfenstern $Z1_k$ berechneten Quotienten $Q_k$ als Maß für die Stärke der Kopplung zwischen den beiden TK-Wegen ermittelt wird. Damit können die zur Verbesserung der Übertragungsqualität auf Telekommunikationswegen ergriffenen Echounterdrük-kungsmaßnahmen wirkungsvoller gestaltet werden.

Fig.1

**Beschreibung**

Die Erfindung betrifft ein Verfahren zur Bestimmung der Signal-Kopplung zwischen zwei Telekommunikations (=TK)-Wegen durch sukzessive Bildung von Quotienten Q aus der Umhüllenden eines Sendesignals T und der Umhüllenden eines von diesem verursachten Echosignals R in Empfangsrichtung eines das Sendesignal T aussendenden TK-Anschlusses zu verschiedenen, aufeinanderfolgenden Zeitpunkten innerhalb eines Zeitfensters Z2, wobei als Maß für die Stärke der Kopplung der beiden TK-Wege das Minimum der Quotienten Q im Zeitfenster Z2 bestimmt wird.

Ein solches Verfahren ist beispielsweise bekannt aus der DE 196 11 548 A1.

In der modernen Telekommunikationstechnik werden immer häufiger echounterdrückende Maßnahmen benötigt, um die Gesprächs- oder Datenverbindungen qualitativ zu verbessern. Diese echounterdrückenden Maßnahmen werden in digitalen Signalprozessoren (DSP) mittels bekannten Algorithmen wie "Last Mean Square" oder auch dem "Compander-Algorithmus" realisiert.

Bei diesen Algorithmen ist es häufig wichtig, Informationen über die Kopplung zwischen den beiden Kommunikationswegen (Sende- und Empfangsrichtung) zu erhalten. Die Berechnung dazu wird im allgemeinen so durchgeführt, daß von beiden Richtungen jeweils die Umhüllende durch Integration ermittelt wird und im Anschluß beide gefundenen Werte durcheinander dividiert werden. Das Ergebnis dieser Division gibt dann Aufschluß über die Kopplung zwischen den beiden Kommunikationswegen.

Die Praxis zeigt jedoch, daß ein Gegensprechen, Türenschlagen, Klatschen, ja selbst scharfe Zischlaute und unterschiedlich große Signallaufzeiten die Berechnung so stören können, daß die Kopplung völlig falsch berechnet wird.

Die DE 195 17 469 A1 beschreibt ein Freisprechverfahren für ein mehrkanaliges Übertragungssystem mit einer Vielzahl von Sende- und Empfangskanälen und entsprechend vielen Mikrophonen und Lautsprechern, beispielsweise ein typisches Tele-Konferenzsystem. Dabei wird die Umhüllende eines jeden Eingangssignals und des zugehörigen Echos eines jeden Kanals berechnet, eine Zeitverschiebung $\tau$ ermittelt, und dann erst eine dem eingangs geschilderten gattungsbildenden Verfahren entsprechende Quotientenbildung vorgenommen, wobei bei m Kanälen insgesamt $m^2$ Kopplungen zu berücksichtigen sind.

Die eingangs zitierte DE 196 11 548 A1 hingegen beschäftigt sich mit dem viel häufiger zu lösenden Problem der Echounterdrückung bei einer "normalen" TK-Verbindung zwischen zwei Endteilnehmern. Hierzu wird das Echo insbesondere mittels einer Compander-Schaltung "maskiert". Es erfolgt eine mehrfache sukzessive Quotientenbildung zwischen Echosignal R und Sendesignal T, wobei die entsprechenden Werte von R und T aber jeweils an einer zufälligen Stelle im Zeitverlauf der jeweiligen Umhüllenden, jedenfalls nicht an einem bestimmten Extremum abgenommen werden. Zudem ist bei dem bekannten Verfahren nach der DE 196 11 548 die Einfügung einer Verzögerungszeit $\tau$ erforderlich, damit die Quotientenberechnung nicht vor dem Eintreffen des Echosignals R bei der Empfangsschaltung der Sendestation erfolgen kann. Um in dieser Hinsicht sicherzugehen, muß der Wert für $\tau$ relativ groß gewählt werden, so daß entsprechend große Fehler bei der Quotientenberechnung auftreten, da in Wirklichkeit ja nicht der Quotient Q = R/T, sondern ein Quotient Q' = R/T' ermittelt wird.

Insbesondere beim Hinzutreten von externen Störungen zum Sendesignal wird die Kopplungsberechnung dadurch sehr ungenau.

Aufgabe der vorliegenden Erfindung ist es demgegenüber, zur Verbesserung der Übertragungsqualität auf Telekommunikationswegen ergriffene Echounterdrückungsmaßnahmen dadurch wirkungsvoller zu gestalten, daß ein besseres Maß für die Stärke der Kopplung in Übertragungsrichtung vom Sender zum Empfänger und umgekehrt bestimmt wird.

Erfindungsgemäß wird diese Aufgabe auf ebenso überraschend einfache wie wirkungsvolle Art und Weise dadurch gelöst, daß in n aufeinander folgenden kurzen Zeitfenstern der Länge $Z1_k$ « Z2 die Maxima der Umhüllenden des jeweiligen Sendesignals $T_k$ und des zugehörigen Echosignals $R_k$ bestimmt und daraus jeweils ein Quotient $Q_k = R_k^{max}/T_k^{max}$ gebildet wird, und daß innerhalb des langen Zeitfensters Z2 das Minimum $Min(Q_k)$ aller in den aufeinander folgenden kurzen Zeitfenstern $Z1_k$ berechneten Quotienten $Q_k$ als Maß für die Stärke der Kopplung zwischen den beiden TK-Wegen ermittelt wird.

Die Auswahl des Minimums gibt die Gewähr, daß Fehlmessungen durch Fremdeinflüsse ausgeschlossen sind. Mit diesem Verfahren läßt sich eine sehr genaue Bestimmung der Kopplungsstärke durchführen, wobei die oben erwähnten störenden externen Einflüsse, insbesondere das Gegensprechen durch den anderen TK-Partner ohne Wirkung bleiben.

Nach wie vor werden Sende- und Empfangssignale nach der Betragsbildung integriert, um die jeweilige Umhüllenden zu erhalten. Ist das Eingangssignal in Senderichtung der Kopplungsberechnung deutlich größer als das Hintergrundgeräusch, wird das Maximum in einem ersten kurzen Zeitfenster Z1 für beide Richtungen gesucht und abgespeichert. In allen anderen Fällen wird das Zeitfenster Z1 wieder auf den Anfangswert zurückgesetzt. Dies verhindert, daß kurze Anregungen, wie z.B. Türenschlagen etc. die Kopplungsberechnung in Gang setzen. Ist die Anregung in Senderichtung nun größer als der Zeitabschnitt Z1, so werden die beiden gefundenen Maxima nach Ablauf des Zeitfensters Z1 durcheinander dividiert. Dieser Quotient gibt dann Aufschluß über die Kopplung in dem jeweiligen kurzen Zeitfenster.

Dieses Ergebnis würde bei idealen Bedingungen (gleiche Integrantionszeitkonstanten, kein Gegensprechen, keine Signallaufzeiten usw.) die reale Kopplung widerspiegeln. Da dies in der Regel nicht der Fall ist, wird in einem wesentlich größeren Zeitfenster Z2 das Minimum aus allen berechneten Quotienten gesucht. Dieses Vorgehen stellt sicher, daß das "ins-Wort-fallen" ("double talk") zu keinen Irritationen bei der Kopplungsberechnung führt.

Das so gefundene minimale Ergebnis gibt nun exakten Aufschluß über die Stärke der Kopplung zwischen beiden Signalrichtungen und ist unabhängig von externen Störungen des Sendesignals.

Die Praxis hat gezeigt, daß für jede Signalart (Sprache, Sinussignale und Rauschen) die Kopplungsberechnung nach oben genannter Art zum selben Ergebnis führt. Dies konnte auch für obengenannte Signale mit Laufzeitbeeinflussung gezeigt werden. Weiterhin positiv ist, daß zur Kopplungsberechnung keine weiteren Daten zwischengespeichert werden müssen.

Besonders bevorzugt ist eine Ausführungsform des erfindungsgemäßen Verfahrens, bei der alle Zeitfenster $Z1_k$ gleich groß gewählt werden, nämlich $Z1_k = Z1 = Z2/n$. Durch die äquidistante Schrittweite der Zeitrasterung können auch die Berechnungsalgorithmen für die Kopplungskoeffizienten erheblich vereinfacht bzw. beschleunigt werden.

Besonders günstig haben sich Verfahrensvarianten erwiesen, bei denen die kurzen Zeitfenster $Z1_k < 0,5s$, vorzugsweise $Z1_k \approx 320ms$ gewählt sind.

Das lange Zeitfenster Z2 wird vorteilhafterweise größer als 3s, vorzugsweise $Z2 \approx 5s$ gewählt.

Bei einer besonders bevorzugten Weiterbildung dieser Ausführungsformen werden die kurzen Zeitfenster gleich groß zu $Z1_k = Z1 = 320ms$ und das lange Zeitfenster $Z2 = n*Z1 = 5,12s$ mit $n = 16$ gewählt. Durch die hexadezimale Unterteilung des langen Zeitfensters Z2 ergeben sich besonders günstige Eigenschaften des Verfahrens für computerberechnete Auswertungsalgorithmen.

Um unsinnige Ergebnisse zu vermeiden, wird bei einer ganz besonders bevorzugten Variante des erfindungsgemäßen Verfahrens eine Berechnung des Quotienten $Q_k$ in einem kurzen Zeitfenster $Z1_k$ nur dann durchgeführt, wenn $T_k^{max} > Tx$, wobei Tx ein vorgebbarer Schwellwert ist.

Bei einer besonders einfachen Weiterbildung dieser Verfahrensvariante wird der Schwellwert Tx über das gesamte lange Zeitfenster Z2 konstant gewählt.

Wesentlich flexibler ist eine alternative Weiterbildung, bei der der Schwellwert Tx adaptiv für jedes kurze Zeitfenster $Z1_k$ individuell bestimmt wird.

Besonders vorteilhaft, allerdings auch rechenaufwendiger, ist eine weitere Alternative, bei der der Schwellwert Tx zu jedem Zeitpunkt t adaptiv bestimmt wird als

$$\mathrm{Tx(t)} \ \doteq \ \mathrm{Min(SAM(T))} \Big|_{t=0}^{t=t^{max}}$$

Für die Praxis besonders günstig haben sich Adaptionszeiten von $t^{max} > 5s$, vorzugsweise $t^{max} \approx 10s$ erwiesen.

Eine weitere vorteilhafte Verfahrensvariante schließlich zeichnet sich dadurch aus, daß eine Berechnung des Quotienten $Q_k$ in einem kurzen Zeitfenster $Z1_k$ nur dann durchgeführt wird, wenn $R_k^{max} > Rx$, wobei Rx ein vorgebbarer Schwellwert ist. Damit bleiben auch bei nichtlinearen Veränderungen der Signale auf dem Kommunikationspfad die mit dem erfindungsgemäßen Verfahren erreichbaren Ergebnisse für die Kopplungswerte in vernünftigen Grenzen.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand von Ausführungsbeispielen näher erläutert. Es zeigen:

Fig. 1    ein Zeitschema für die Signalabtastung beim erfindungsgemäßen Verfahren;

Fig. 2a   ein grobes Zeitschema für die Kopplungsberechnung nach dem Stand der Technik für eine einfache Signalform;

Fig. 2b   ein aus zwei Einfachsignalen zusammengesetzte kompliziertes Doppelpeaksignal; und

Fig. 2c    die Kopplungsberechnung nach dem Stand der Techik mit dem Doppelpeaksignal nach Fig. 2b.

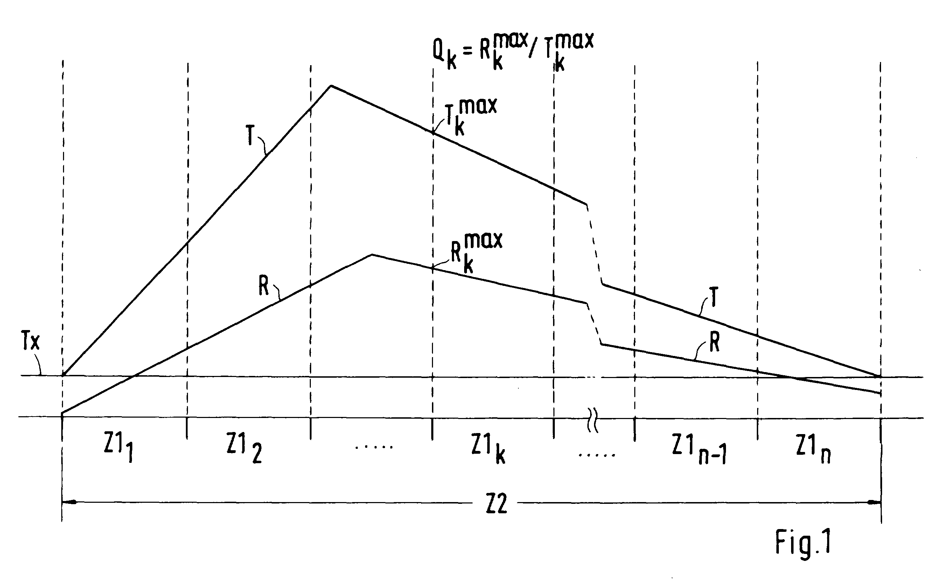

Fig. 1 stellt einen schematischen Intensitätsverlauf der Umhüllenden eines Sendesignals T sowie eines von diesem verursachten Echosignals R in Empfangsrichtung eines das Sendesignal T aussendenden Telekommunikationsanschlusses in einem Zeitfenster Z2 dar. Das lange Zeitfenster Z2 ist aufgeteilt in n sukzessive aufeinanderfolgende, untereinander gleichlange Zeitfenster $Z1_k$, die im Bereich unterhalb 0,5s gewählt werden können. Bei $Z1_k = Z1 = 320$ ms und $n = 16$ ergibt sich das lange Zeitfenster zu $Z2 = n*Z1 = 5,12s$.

Zur Bestimmung der Signal-Kopplung zwischen der Sende- und Empfangsrichtung des aussendenden TK-Anschlusses wird in den n aufeinanderfolgenden kurzen Zeitfenstern $Z1_1$ bis $Z1_n$ jeweils das Maximum der Umhüllenden des Sendesignals $T_k$ sowie das Maximum des zugehörigen Echosignals $R_k$ im entsprechenden k-ten kurzen Zeitfenster $Z1_k$ bestimmt und daraus jeweils ein Quotient $Q_k = R_k^{max}/T_k^{max}$ gebildet, falls in dem entsprechenden kurzen Zeitfenster $Z1_k$ der Wert von $T_k^{max}$ größer als ein vorgegebener Schwellwert Tx ist.

Bei dem in Fig. 1 gezeigten Ausführungsbeispiel ist der Schwellwert Tx über das gesamte lange Zeitfenster Z2 konstant gewählt. Bei anderen Verfahrensvarianten kann aber auch der Schwellwert Tx adaptiv für jedes kurze Zeitfenster $Z1_k$ individuell bestimmt werden. Möglich ist auch eine adaptive Bestimmung des Schwellwertes Tx zu jedem Zeitpunkt t als

$$Tx(t) = Min(SAM(T))\Big|_{t=0}^{t=t^{max}} .$$

Vorzugsweise wird $t^{max} < 5s$, insbesondere $t^{max} \approx 10s$ gewählt.

Zusätzlich kann auch ein Schwellwert Rx vorgegeben werden, bei dessen Unterschreiten durch $R_k^{max}$ ebenfalls keine Berechnung des Quotienten $Q_k$ in dem entsprechenden kurzen Zeitfenster $Z1_k$ durchgeführt wird.

Sobald alle Quotienten $Q_k$ aus den Zeit fensters $Z1_1$ bis $Z1_n$ bestimmt sind oder ihre Berechnung wegen Unterschreitung eines Schwellwertes nicht erfolgte, wird innerhalb des langen Zeitfensters Z2 das Minimum $Min(Q_k)$ aller in den aufeinanderfolgenden kurzen Zeitfensters $Z1_k$ berechneten Quotienten $Q_k$ als Maß für die Stärke der Kopplung zwischen den beiden TK-Wegen ermittelt. Diese Kopplungsstärke kann dann beispielsweise bei einem Compander-Verfahren oder bei FIR-Filtern zur Echounterdrückung eingesetzt werden, wodurch die Konvergenz des jeweiligen Echounterdrückungs-Algorithmus erheblich beschleunigt wird.

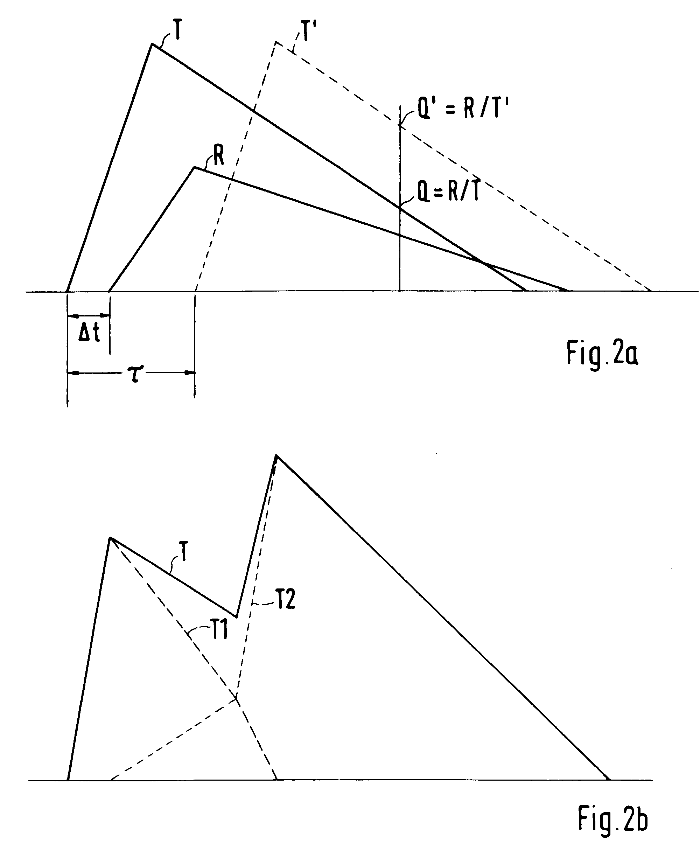

Fig. 2a stellt ein grobes Zeitschema zur Kopplungsberechnung nach dem eingangs zitierten Stand der Technik dar. Dabei wird das Sendesignal T, auf das mit einer Zeitverzögerung At ein Echosignal R folgt, auf der Zeitachse um einen Verzögerungswert τ verschoben, so daß bei der als senkrechter Strich angedeuteten Teststelle statt des Quotienten Q = R/T der verschobene Quotient Q'=R/T' aus der gestrichelt gezeichneten verschobenen Signalkurve T' ermittelt wird, was natürlich zu mehr oder minder großen Fehlern führt.

Einen etwas komplizierteren signalverlauf zeigt schematisch Fig. 2b, in der ein Sendesignal T dargestellt ist, das aus der Überlagerung zweier Einzelsignale T1 + T2 zusammengesetzt ist.

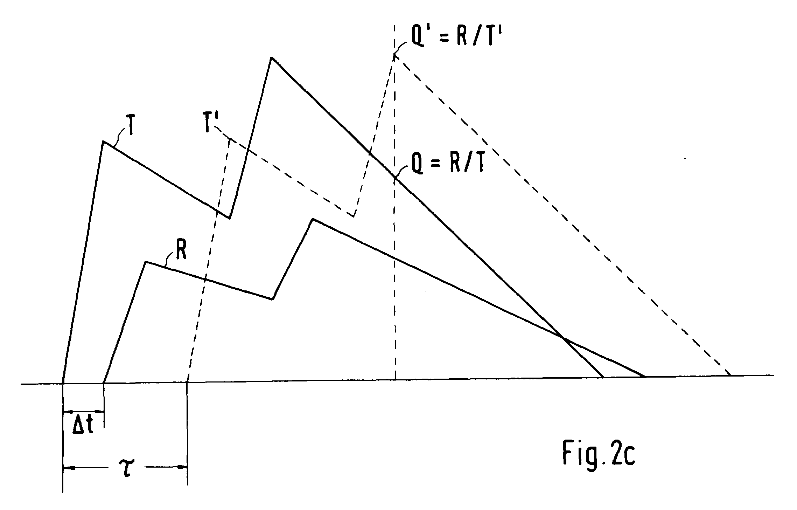

In Fig. 2c schließlich ist schematisch die Kopplungsberechnung für das zusammengesetzte Signal T aus Fig. 2b dargestellt, wie sie nach dem eingangs zitierten Stand der Technik aufgrund eines um die Verzögerungszeit τ verschobenen virtuellen Signales T' erfolgen würde. Dabei ist besonders deutlich zu erkennen, daß innerhalb kurz aufeinanderfolgender Zeiten der errechnete Wert für die Kopplung Q'= R/T' von dem nach dem erfindungsgemäßen Verfahren berechneten wirklichen Wert Q = R/T sowohl nach unten als auch nach oben hin sehr stark abweichen kann. Dieses Problem kann beim erfindungsgemäßen Verfahren nicht auftreten, da hier nicht mit einer Verzögerungszeit τ gearbeitet werden muß.

## Patentansprüche

1.    Verfahren zur Bestimmung der Signal-Kopplung zwischen zwei Telekommunikations(=TK)-Wegen durch sukzessive Bildung von Quotienten Q aus der Umhüllenden eines Sendesignals T und der Umhüllenden eines von diesem verursachten Echosignals R in Empfangsrichtung eines das Sendesignal T aussendenden TK-Anschlusses zu verschiedenen, aufeinanderfolgenden Zeitpunkten innerhalb eines Zeitfensters Z2, wobei als Maß für die Stärke der Kopplung der beiden TK-Wege das Minimum der Quotienten Q im Zeitfenster Z2 bestimmt wird,

dadurch gekennzeichnet,

daß in n aufeinander folgenden kurzen Zeitfenstern der Länge $Z1_k \ll Z2$ die Maxima der Umhüllenden des jeweiligen Sendesignals $T_k$ und des zugehörigen Echosignals $R_k$ bestimmt und daraus jeweils ein Quotient

$$Q_k = R_k^{max}/T_k^{max}$$

gebildet wird, und daß innerhalb des langen Zeitfensters Z2 das Minimum Min(Qk) aller in den aufeinander folgenden kurzen Zeit fenstern $Z1_k$ berechneten Quotienten $Q_k$ als Maß für die Stärke der Kopplung zwischen den beiden TK-Wegen ermittelt wird.

2. Verfahren nach Anspruch 1, dadurch gekennzeichnet, daß alle Zeitfenster $Z1_k$ gleich groß gewählt werden, nämlich $Z1_k = Z1 = Z2/n$.

3. Verfahren nach einem der vorhergehenden Ansprüche, dadurch gekennzeichnet, daß die kurzen Zeitfenster $Z1_k$ < 0,5s, vorzugsweise $Z1_k \approx 320ms$ gewählt werden.

4. Verfahren nach einem der vorhergehenden Ansprüche, dadurch gekennzeichnet, daß das lange Zeitfenster Z2 > 3s, vorzugsweise Z2 ≈ 5s gewählt wird.

5. Verfahren nach den Ansprüchen 2 bis 4, dadurch gekennzeichnet, daß die kurzen Zeitfenster gleich groß zu $Z1_k$ = Z1 = 320ms und das lange Zeitfenster Z2 = n*Z1 = 5,12s mit n = 16 gewählt werden.

6. Verfahren nach einem der vorhergehenden Ansprüche, dadurch gekennzeichnet, daß eine Berechnung des Quotienten $Q_k$ in einem kurzen Zeitfenster $Z1_k$ nur dann durchgeführt wird, wenn $T_k^{max}$ > Tx, wobei Tx ein vorgebbarer Schwellwert ist.

7. Verfahren nach Anspruch 6, dadurch gekennzeichnet, daß der Schwellwert Tx über das gesamte lange Zeitfenster Z2 konstant gewählt wird.

8. Verfahren nach Anspruch 6, dadurch gekennzeichnet, daß der Schwellwert Tx adaptiv für jedes kurze Zeitfenster $Z1_k$ individuell bestimmt wird.

9. Verfahren nach Anspruch 6, dadurch gekennzeichnet, daß der Schwellwert Tx zu jedem Zeitpunkt t adaptiv bestimmt wird als

$$Tx(t) = Min(SAM(T)) \Big|_{t=0}^{t=t^{max}}.$$

10. Verfahren nach Anspruch 9, dadurch gekennzeichnet, daß $t^{max}$ > 5s, vorzugsweise $t^{max} \approx 10s$ gewählt wird.

11. Verfahren nach einem der Ansprüche 6 bis 10, dadurch gekennzeichnet, daß eine Berechnung des Quotienten $Q_k$ in einem kurzen Zeitfenster $Z1_k$ nur dann durchgeführt wird, wenn $R_k^{max}$ > Rx, wobei Rx ein vorgebbarer Schwellwert ist.

$$Q_k = R_k^{max} / T_k^{max}$$

Fig.1

EP 0 963 057 A2

Fig.2a

Fig.2b

Fig.2c

$Q' = R/T'$

$Q = R/T$

T

T'

R

$\Delta t$

$\tau$

EP 0 963 057 A2